# DEMANDE DE BREVET EUROPEEN

(11) **EP 0 939 137 A1**
(43) Date de publication de la demande: **01.09.1999**
(21) Numéro de dépôt: 99400413.3
(22) Date de dépôt: 22.02.1999
(51) Int. Cl.: C21D 1/68

(54) **Procédé pour prévenir le collage de tôles métalliques lors d'un traitement thermique**

(30) Priorité: 25.02.1998 FR 9802266
(71) Demandeur: SOLLAC, 92800 Puteaux (FR)
(72) Inventeur: Popadenec, Alain, 57700 Marspich (FR); Legal, Cécile, 57100 Thionville (FR)
(74) Mandataire: Neyret, Daniel Jean Marie

(57) **Abrégé**

Procédé comprenant une étape de traitement thermique à proprement parler pendant laquelle lesdites tôles sont en contact sur une partie de leur surface (c'est à dire qu'elles sont par exemples bobinées ou en paquets serrés) et une étape de traitement préalable de ces surfaces à l'aide d'une solution aqueuse ou hydro-alcoolique dans laquelle on a introduit un produit organique de type silane.

Ce traitement permet d'éviter le collage des tôles ; il est particulièrement efficace et ne nécessite pas d'activation préalable de la surface.

## Description

L'invention concerne un procédé de traitement thermique de tôles métalliques comprenant une étape de traitement thermique à proprement parler pendant laquelle lesdites tôles sont en contact les unes avec les autres au niveau d'au moins une partie de leur surface et une étape de traitement préalable des dites surfaces dans le but d'empêcher le collage desdites tôles au niveau desdites surfaces de contact.

Lorsqu'on effectue un traitement thermique de recuit de tôles d'acier en bobines ou en feuilles serrées (empilées sans cales de séparation), les différentes spires de la bobine ou les feuilles empilées risquent souvent de se coller ou d'adhérer les unes aux autres ; ce collage ou cette adhérence est provoqué par la diffusion du métal au niveau des contacts des surfaces de tôles.

Ce risque de collage apparaît notamment dans le cas de recuit d'alliation.

On entend ici par recuit d'alliation un traitement thermique de tôles d'acier revêtues d'un dépôt métallique destiné à provoquer une alliation entre le fer du substrat et le métal du revêtement ; le métal de revêtement est, par exemple du zinc appliqué au trempé ou du nickel électrodéposé.

Ce type de recuit est généralement effectué à haute température, ce qui augmente le risque de collage : dans la fourchette 450-650°C pour l'alliation d'un revêtement de nickel, 250-400°C pour l'alliation d'un revêtement de zinc.

Le document JP 01 298113 - 1989 - Watanabe Hajime - décrit un traitement d'une surface métallique ou polymère préalable à un traitement de découpe, soudage ou durcissement au laser de cette surface ; ce traitement préalable consiste à appliquer un agent de revêtement comprenant une poudre de forte conductivité résistant à la chaleur, un agent pégueux choisi parmi les acides, esters ou sels stéariques, les polysilanes organiques ou les huiles de silicone, les polyéthylènes ou polybutènes et leurs dérivés dilués et dispersés dans un solvant organique à bas point d'ébullition, comme l'éthanol ou le CCl₄.

Rien n'indique, dans ce document, que ce traitement préalable puisse limiter des risques de collage, puisque l'un des buts poursuivis ici est, au contraire, de permettre le soudage.

Pour limiter le risque de collage, il est connu d'effectuer, préalablement au traitement thermique, un traitement de la surface des tôles, comme décrit dans les documents suivants :
- JP 08 333689 A - 1996 - TOYO KOHAN : pour la préparation au traitement thermique d'une tôle revêtue de nickel, on applique préalablement 0,1 à 2,5 mg/m² de silice par trempage de la tôle dans une solution d'orthosilicate de sodium ;
- JP 04 154973 - 1992 - SUMITOMO - pour la préparation au traitement thermique de fils d'acier, on décalamine le fil par décapage puis on le trempe dans une solution à base de silice et de soude et on chauffe à une température comprise entre 70 et 90°C de manière à former un dépôt de densité surfacique supérieure à 3 g/m² ;
- JP 55 82726 - 1980 - TAMAGAWA - pour éviter le collage inter-spires lors du recuit base de tôles d'acier de nuance dite « bas carbone », on pulvérise au préalable sur les tôles une solution de silicate ou une suspension colloïdale de silice ; on procède dans un solvant comme le méthanol.

L'inconvénient de ces traitements de surface préalables destinés à empêcher le collage est qu'ils doivent être pratiqués sur des surfaces propres, sinon activées, ce qui nécessite de dégraisser sinon de décaper cette surface avant l'application du dépôt « anti-collage ».

L'invention a pour but d'éviter cet inconvénient et d'offrir un traitement de surface qui peut être appliqué directement sur les tôles métalliques, sans dégraissage préalable.

A cet effet, l'invention a pour objet un procédé du type précité, caractérisé en ce que ledit traitement préalable comprend une opération d'application, sur lesdites surfaces, d'une solution aqueuse ou hydro-alcoolique dans laquelle on a introduit au moins un produit organique de type silane.

Selon l'invention, la solution de traitement de surface n'est pas à proprement parler une solution de silanes, mais une solution contenant des produits d'hydrolyse de silanes.

L'invention peut également présenter une ou plusieurs des caractéristiques suivantes :
- ladite opération d'application est réalisée de manière à obtenir, sur lesdites surfaces, un dépôt de type polysiloxanes dont la densité surfacique est inférieure ou égale à 20 mg d'équivalent silicium par m² et par face ;
- la quantité dudit silane introduit dans la solution de traitement est comprise entre 1% et 15% en volume.

L'invention sera mieux comprise à la lecture de la description qui va suivre, donnée à titre d'exemple non limitatif.

Il s'agit donc de traiter thermiquement des tôles métalliques, notamment des tôles d'acier, dans une enceinte de traitement thermique.

Pour introduire ces tôles dans l'enceinte de traitement, il est nécessaire de les enrouler en bobines ou de les empiler (si elles sont découpées en feuilles).

Pour prévenir les risques de collage, on va donc effectuer un traitement de la surface de ces tôles, sans dégraissage préalable.

Ces tôles d'acier à traiter peuvent provenir directement d'une opération de laminage ou d'une opération de revêtement (par exemple d'une couche à base de nickel ou de zinc) ; elles peuvent donc comporter des traces de graisse et leur surface n'est pas « activée» ; un exemple de surface « activée » est une surface sortant d'une opération de décapage.

Comme solution de traitement de surface apte à former un dépôt inhibiteur du collage sur la surface, on utilise selon l'invention une solution ou émulsion aqueuse ou hydro-alcoolique dans laquelle on a introduit au moins un produit organique de type silane.

Ce silane peut être choisi parmi les organosilanes répondant à la formule générale Rₘ-Si-(X)₍₄₋ₘ₎ :
- dans laquelle les radicaux X, qui peuvent être identiques ou différents, sont choisis parmi le groupe comprenant les radicaux alkoxy, acyloxy, alkylcarbonyl ou alkoxycarbonyl, alcool, ou, plus rarement, halogène;
- dans laquelle les radicaux R, qui peuvent être identiques ou différents, sont choisis parmi le groupe comprenant les chaînes carbonées alkyl, alkenyl, alkylnyl, aryl, arylalkyl, alkylaryl, arylalkenyl, alkenylaryl, arylakynyl ou alkylnylaryl, qui peuvent être interrompues par des atomes O, S ou N, et qui peuvent être substituées par un ou plusieurs radicaux choisis dans le groupe comprenant les halogènes, les radicaux amino, amide, aldéhyde, keto, alkylcarbonyl, carboxy, alkoxycarbonyl, mercapto, cyano, hydroxy, alkoxy, alkoxycarbonyl, acide sulfonique, acide phosphorique, acryloxy, methacryloxy, epoxy, vinyle, ureido, glycidoxy, NH₂-, -CH=CH-, CH₂=CH-, CH₂=(CH₃)(COO-), CH₂(-O-)CH-CH₂O-, HS-, Cl;
- où m vaut 0, 1, 2 ou 3.

De préférence, m = 1; dans ce cas, tous les radicaux X peuvent être identiques et désigner -OCH₂CH₃ ou -OCH₃, et l'unique radical R peut désigner: NH₂-(CH₂)₃- ou CH₃-NH-(CH₂-)₃- ; on utilise alors par exemple le γ-aminopropyltriéthoxysilane.

Le nombre d'atomes de carbone des dites chaînes carbonées peut atteindre jusqu'à 17 ; on peut ainsi utiliser par exemple l'octyltriéthoxysilane (8 atomes de carbone dans la chaîne) en émulsion dans l'eau.

Dans le cas où m = 0, on utilise par exemple le tétra-éthoxy-silane parfois dénommé tétraéthylsilicate de formule générale Si-(0-C₂H₅)₄ ; cette molécule a la particularité de polymériser pour donner en solution de l'éthylpolysilicate, voire un hydrolysat d'ester d'acide silicique.

Ce silane peut également être choisi parmi les polysilanes ou les esters d'acide silicique de formule générale (R'O)₃Si-O-[Si(OR")₂]ₖ-O-Si(OR‴)₃, où R', R" et R‴ sont des groupements alkyl, généralement méthyl, éthyl ou propyl, et où k peut prendre des valeurs entières quelconques.

Comme silane, on peut donc utiliser du γ-aminopropyltriéthoxysilane, du tétraéthoxysilane, ou de l'octyltriéthoxysilane.

Si le silane utilisé n'est pas suffisamment soluble dans l'eau, on utilise une solution hydroalcoolique ou une émulsion.

Lorsqu'il est introduit dans la solution hydro-alcoolique, le silane s'hydrolyse par exemple selon la réaction :

Rₘ-SiX₍₄₋ₘ₎ + H₂O -> Rₘ-Si(OH)₍₄₋ₘ₎ + m R'OH

La quantité de silane introduite dans la solution ou émulsion aqueuse de traitement est généralement comprise entre 1% et 15% en volume par rapport à la solution ou émulsion.

D'une manière connue en elle-même, la solution de traitement de surface peut contenir d'autres additifs, comme des agents tensio-actifs pour faciliter son application, comme des agents bactéricides pour la stabilité au stockage.

Puis on applique sur la surface des tôles la solution ou émulsion aqueuse ou hydroalcoolique qui contient les produits d'hydrolyse des silanes introduits.

De préférence, la concentration en silane et le mode d'application de la solution de traitement sont adaptés d'une manière connue en elle-même pour former à la surface des tôles un dépôt de type polysiloxanes présentant une densité surfacique comprise entre 0,1 et 20 mg/m²/face, en poids d'équivalent silicium, cette densité surfacique étant mesurée après séchage du dépôt.

L'inconvénient d'un dépôt de densité surfacique inférieure à 0,1 mg/m²/face en équivalent silicium est qu'il ne présente plus d'efficacité suffisante de prévention du collage.

L'inconvénient d'un dépôt de densité surfacique supérieure à 20 mg/m²/face en équivalent silicium est, outre le coût, qu'il provoque des difficultés d'écrouissage et de phosphatation.

La surface du substrat métallique étant au départ hydroxydée, on pense que le processus de dépôt s'effectue selon la réaction du type :

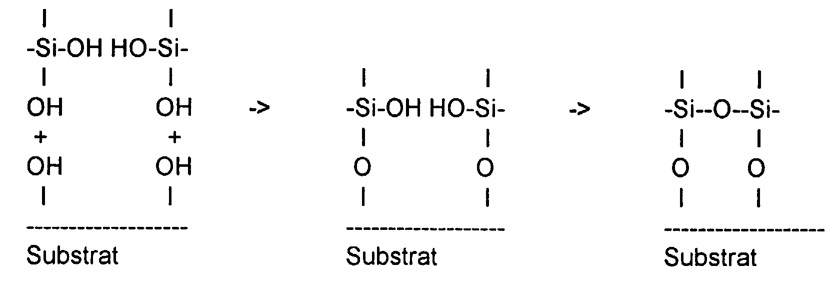

Après application de la solution ou émulsion aqueuse ou hydroalcoolique, on procède au séchage de la tôle ; cette étape de séchage est importante pour parvenir à une réticulation suffisante des polysiloxanes qui forment la base du dépôt : l'étape de séchage peut correspondre au début du traitement thermique.

Après application de la solution de traitement, la tôle est prête pour être traitée thermiquement.

On dispose donc les tôles en bobine (bobinage) ou en empilement et on procède au traitement thermique d'une manière classique.

Après traitement thermique, on observe une diminution très sensible des risques de collage des spires de la bobine ou des feuilles de l'empilement, par rapport au cas où l'on n'effectue aucun traitement de surface préalable.

Ce résultat est obtenu :
- alors qu'on ne pratique aucun dégraissage de la surface avant application de la solution de traitement de surface ;
- même pour des dépôts de densité surfacique faible, inférieure à 20 mg/m²/face en équivalent silicium.

Un autre avantage de l'invention est qu'on peut utiliser un procédé d'application simple et économique pour effectuer le traitement ; en effet, la vitesse de dépôt étant beaucoup plus importante que pour les traitements de surface décrits dans l'art antérieur, on peut raccourcir la ligne continue de traitement de surface et il n'est pas utile d'effectuer le traitement sous polarisation électrique.

L'enduction au rouleau (« roll-coat » en langue anglaise) ou l'enduction par des buses d'aspersion sont des procédés d'application qualifiés de « simples » et sont utilisables pour la mise en oeuvre de l'invention.

L'exemple suivant illustre l'invention :

Sur une bande de tôle d'acier laminée à froid et revêtue d'une couche de 2,5 µm de nickel électrodéposé, on applique une solution aqueuse préparée par introduction de y-aminopropyltriéthoxysilane dans de l'eau.

La concentration en silane et les conditions d'application sont adaptées pour obtenir un dépôt, exprimé en poids d'équivalent silicium, de :
- Modalité 1 : solution à 5% en volume de silane, dépôt de 7 mg/m²/face.
- Modalité 2 : solution à 10% en volume de silane, dépôt de 13 mg/m²/face.

La Modalité 0 (zéro) correspond à l'absence de traitement de surface.

Après application, on sèche pendant 10 secondes à 80°C ; on peut également obtenir une tôle traitée et sèche en effectuant l'application sur une tôle portée à 150°C environ.

Les tôles correspondant aux différentes modalités sont ensuite empilées (empilage serré) et traitées thermiquement à 700°C pendant 15 heures, sous une atmosphère d'azote contenant 3% environ d'hydrogène.

Après traitement thermique, on évalue ensuite le collage des tôles de la manière suivante :
- on prélève deux lamelles de tôles accolées : largeur 2,5 cm, longueur 18,5 cm ;
- à une extrémité, on écarte les lamelles sur 2,5 cm de longueur et l'on rabat les extrémités écartées de chaque côté du plan général des tôles accolées, perpendiculairement à ce plan ;
- à l'aide des deux « rabats » engagés dans les mors d'une machine classique de traction, on écarte complètement les deux lamelles de tôles (le déplacement total à effectuer vaut donc 32 cm) tout en mesurant la force de « pelage » à appliquer pour obtenir l'écartement ; la force de pelage s'exerce donc perpendiculairement au plan général des tôles accolées.

On calcule la force moyenne de pelage et on la rapporte à la largeur des lamelles.

On obtient les résultats suivants :
- Modalité 0 (référence) : 32 N/cm.
- Modalité 1 : 19 N/cm.
- Modalité 2 : 10 N/cm.

On constate donc une diminution très sensible des problèmes de collage grâce au traitement de surface préalable selon l'invention ; le collage diminue en proportion de l'épaisseur du dépôt appliqué à partir de la solution aqueuse ; cet avantage est obtenu sans aucun dégraissage préalable de la tôle.

Ce traitement préalable est également efficace sur des tôles huilées.

## Revendications

1. Procédé de traitement thermique de tôles métalliques comprenant une étape de traitement thermique à proprement parler pendant laquelle lesdites tôles sont en contact les unes avec les autres au niveau d'au moins une partie de leur surface et une étape de traitement préalable des dites surfaces dans le but d'empêcher le collage desdites tôles au niveau desdites surfaces de contact, caractérisé en ce que ledit traitement préalable comprend une opération d'application, sur lesdites surfaces, d'une solution aqueuse ou hydro-alcoolique dans laquelle on a introduit au moins un produit organique de type silane.

2. Procédé selon la revendication 1 caractérisé en ce que ladite opération d'application est réalisée de manière à obtenir, sur lesdites surfaces, un dépôt de type polysiloxanes dont la densité surfacique est inférieure ou égale à 20 mg d'équivalent silicium par m² et par face.

3. Procédé selon la revendication 2 caractérisé en ce que la quantité dudit silane introduit dans la solution de traitement est comprise entre 1% et 15% en volume.

4. Procédé selon l'une quelconque des revendications précédentes caractérisé en ce que ledit silane est choisi parmi les organosilanes répondant à la formule générale Rₘ-Si-(X)₍₄₋ₘ₎ :
- dans laquelle les radicaux X, qui peuvent être identiques ou différents, sont choisis parmi le groupe comprenant les radicaux alkoxy, acyloxy, alkylcarbonyl ou alkoxycarbonyl, alcool, halogène ;
- dans laquelle les radicaux R, qui peuvent être identiques ou différents, sont choisis parmi le groupe comprenant les chaînes carbonées alkyl, alkenyl, alkylnyl, aryl, arylalkyl, alkylaryl, arylalkenyl, alkenylaryl, arylakynyl ou alkylnylaryl, qui peuvent être interrompues par des atomes O, S ou N, et qui peuvent être substituées par un ou plusieurs radicaux choisis dans le groupe comprenant les halogènes, les radicaux amino, amide, aldéhyde, keto, alkylcarbonyl, carboxy, alkoxycarbonyl, mercapto, cyano, hydroxy, alkoxy, alkoxycarbonyl, acide sulfonique, acide phosphorique, acryloxy, methacryloxy, epoxy, vinyle, ureido, glycidoxy ;
- où m vaut 0, 1, 2 ou 3.

5. Procédé selon la revendication 4 caractérisé en ce que :
- m = 1
- tous les groupes X sont identiques et désignent -OCH₂CH₃ ou -OCH₃,
- l'unique radical R désigne : NH₂-(CH₂)₃- ou CH₃-NH-(CH₂-)₃-.

6. Procédé selon la revendication 4 caractérisé en ce que :
- m = 1,
- le nombre d'atomes de carbone des dites chaînes carbonées est inférieur ou égal à 17.

7. Procédé selon l'une quelconque des revendications 1 à 3 caractérisé en ce que ledit silane est choisi parmi les polysilanes ou les esters d'acide silicique de formule générale (R'O)₃Si-O-[Si(OR")₂]ₖ-O-Si(OR‴)₃, où R', R" et R"' sont des groupements alkyl.
